## Europäisches Patentamt
## European Patent Office
## Office européen des brevets

(19)

(11) Numéro de publication: **0 115 457**
**B1**

(12)

# FASCICULE DE BREVET EUROPÉEN

(45) Date de publication du fascicule du brevet: **10.06.87**

(51) Int. Cl.⁴: **F 16 D 55/224**

(21) Numéro de dépôt: **84400135.4**

(22) Date de dépôt: **20.01.84**

(54) Frein à disque à étrier coulissant.

(30) Priorité: **20.01.83 FR 8300846**

(43) Date de publication de la demande:
**08.08.84 Bulletin 84/32**

(45) Mention de la délivrance du brevet:
**10.06.87 Bulletin 87/24**

(84) Etats contractants désignés:
**DE GB IT NL SE**

(56) Documents cité:
**FR-A-1 521 762**
**FR-A-2 289 799**
**FR-A-2 344 751**
**GB-A-1 563 213**
**US-A-4 072 214**

(73) Titulaire: **BENDIX France, 126, rue de Stalingrad, F-93700 Drancy (FR)**

(72) Inventeur: **Méry, Jean- Claude, 61 rue Emile Zola, F-93320 Pavillons S/Bois (FR)**

(74) Mandataire: **Poidatz, Emmanuel, Service Brevets Bendix 44 rue François 1er, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

EP 0 115 457 B1

## Description

L'invention a pour objet un frein à disque à étrier coulissant, notamment pour véhicule automobile.

L'invention concerne plus particulièrement un frein à disque à étrier monté coulissant par l'intermédiaire de deux colonnettes axiales sur un support fixe, des moyens d'actionnement étant associés audit étrier pour solliciter directement un premier élément de friction contre une première face du disque et, par réaction au travers de l'étrier coulissant, un second élément de friction contre l'autre face du disque, lesdites colonnettes étant solidaires de l'étrier et traversant des alésages de guidage et de coulissement formés dans des bras circonférentiellement espacés dudit support fixe.

Un frein de ce type a été décrit dans le brevet FR-A-2 289 799. Celui-ci décrit un frein à disque comportant un étrier coulissant dont une portion centrale passe au-dessus du disque de manière à recevoir un élément de friction et solliciter éventuellement celui-ci en engagement de friction contre le disque tournant lorsque ledit étrier coulisse au moyen de colonnettes fixes par rapport à l'étrier placées de part et d'autre de ladite portion centrale et passant à travers des alésages de coulissement et de guidage formés dans un support fixe. Ce frein présente néanmoins l'inconvénient de nécessiter le démontage d'une colonnette et la rotation de l'étrier autour de l'autre colonnette lorsqu'on veut procéder au remplacement des éléments de friction. Cette opération, bien que simple, présente des risques de détérioration de la qualité du coulissement de l'étrier, par exemple par pollution des zones de contact de coulissement, et également le risque de détérioration de la conduite d'amenée de liquide de frein située entre le maître-cylindre du véhicule et le moteur de frein associé à l'étrier.

Pour éviter cet inconvénient, le brevet GB-A-1 563 213 décrit un frein dans lequel l'étrier coulissant présente la forme générale d'un cadre rectangulaire et comporte deux portions latérales orientées parallèlement à l'axe du disque de manière à chevaucher celui-ci et deux portions longitudinales orientées parallèlement au plan du disque, toutes ces portions délimitant une ouverture centrale sensiblement rectangulaire au travers de laquelle peuvent être introduits et extraits radialement les éléments de friction sans qu'il soit nécessaire de démonter préalablement l'une ou l'autre des colonnettes de guidage ni de faire pivoter l'étrier autour de l'une d'entre elles. Les colonnettes sont elles-mêmes contenues à l'intérieur des portions latérales de l'étrier et sont réalisées sous la forme de vis à corps lisse traversant de part en part l'étrier, les extrémités des bras du support fixe étant elles-mêmes reçues à l'intérieur de cavités ménagées à cet effet dans lesdites portions latérales. Ce mode de construction présente toutefois l'inconvénient de ne pouvoir s'appliquer qu'au cas où le frein possède des patins de friction de relativement faible largeur si l'on ne veut pas exposer les portions longitudinales de l'étrier à des déformations de flexion excessives lors du serrage du frein, ni, pour combattre ce risque, renforcer exagérément la section et donc l'encombrement desdites portions longitudinales de l'étrier.

La présente invention vise un perfectionnement à ce mode de construction connu, grâce auquel celui-ci peut s'appliquer au cas de patins de plus grandes dimensions sans avoir pour conséquence le risque de déformation ci-dessus évoqué des portions longitudinales de l'étrier.

Ce but est atteint, conformément à l'invention, et dans un frein du genre précité, grâce au fait que l'ouverture centrale de l'étrier se prolonge de part et d'autre des éléments de friction au delà de leurs extrémités latérales de façon à ménager des espaces libres entre celles-ci et les portions latérales de l'étrier, que les bras du support fixe et les colonnettes axiales sont logés dans lesdits espaces libres, et que les colonnettes axiales sont engagées sous précontrainte dans les portions longitudinales de l'étrier de manière à imposer à celles-ci une précontrainte de flexion permanente tendant à les rapprocher l'une de l'autre. Il en résulte que les portions longitudinales de l'étrier sont soumises en permanence à une précontrainte de flexion de sens opposé à celui des efforts de flexion développés lors du serrage du frein, ce qui réduit considérablement les risques de déformation.

Les caractéristiques et avantages de l'invention apparaîtront clairement à la lecture de la description suivante d'une forme préférentielle de réalisation, donnée à simple titre d'exemple et en se référant aux dessins annexés, en lesquels:

- la figure 1 est une vue de dessus d'un frein à disque réalisé conformément à l'invention
- la figure 2 est une vue de face avec une coupe partielle selon la ligne 2 - 2 de la figure 1 et comportant une portion arrachée; et
- la figure 3 est une vue en coupe selon la ligne 3 - 3 de la figure 1.

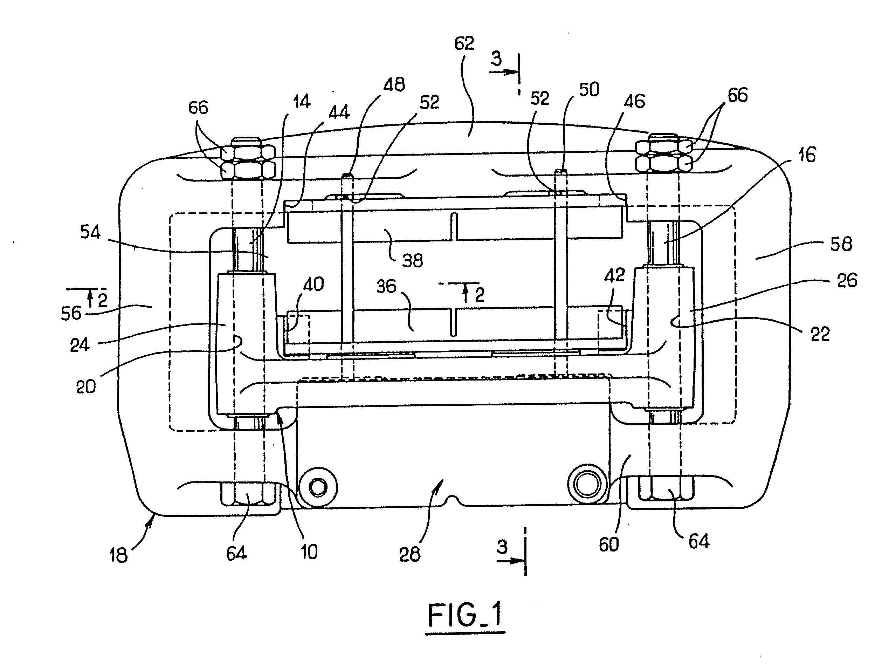

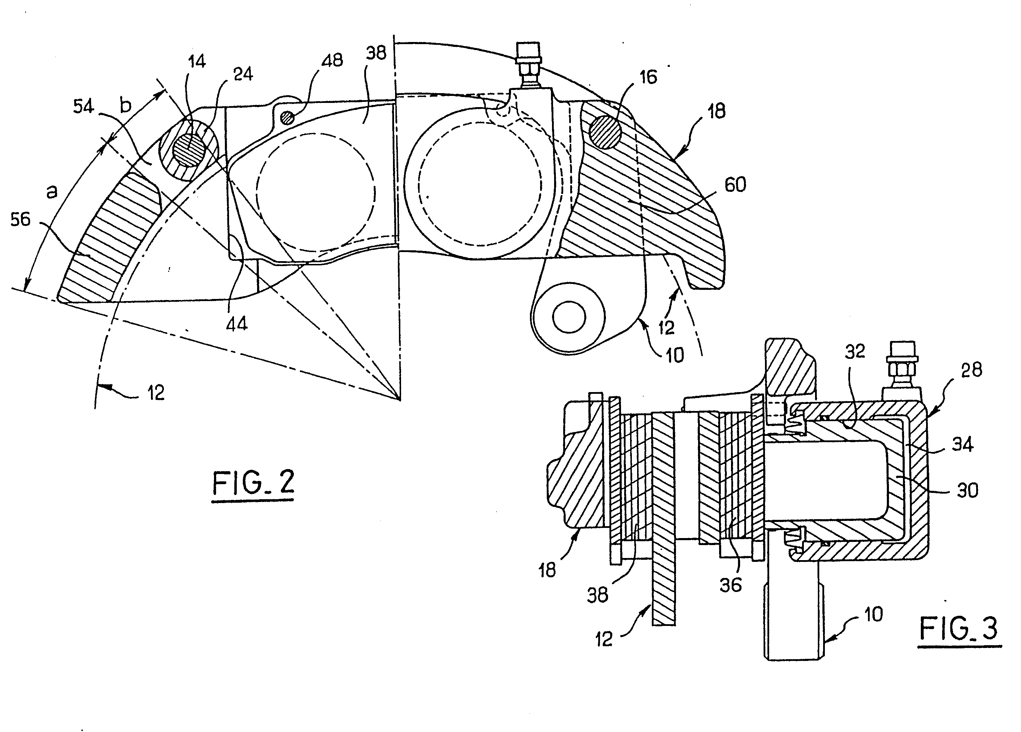

Le frein à disque représenté sur les figures 1 à 3 comporte un support fixe 10 prévu pour être associé à une partie fixe du véhicule (non représentée) et constitué, dans le mode de réalisation représenté, par une plaque disposée au voisinage d'un disque 12 prévu pour être associé en rotation avec une roue du véhicule (non représentée). Le support fixe 10 reçoit en coulissement, au moyen de deux colonnettes axiales circonférentiellement espacées 14 et 16 un étrier mobile 18 chevauchant le disque. Les axes des colonnettes 14 et 16 sont sensiblement parallèles à l'axe de rotation du disque 12. Comme on le voit plus particulièrement sur la figure 1, les colonnettes 14 et 16 sont fixes par rapport à l'étrier 18 et passent dans des alésages 20 et 22 formés dans des bras 24 et 26 respectivement du support fixe 10. L'étrier 18 comporte classiquement des moyens d'actionnement constitués par un moteur de frein

hydraulique 28, dans le mode de réalisation représenté, celui-ci comporte un moteur double, chacun d'eux comportant un piston 30 monté coulissant dans un alésage 32 défini dans l'étrier 18 et sensible à la pression règnant dans une chambre de commande 34 susceptible d'être reliée à une source de pression telle que par exemple, le maître-cylindre du véhicule (non représenté). Les pistons 30 sont disposés de façon à solliciter directement un premier élément de friction ou élément intérieur 36 contre une première face du disque 12 lorsque le fluide sous pression est admis dans la chambre 34. Par réaction, l'étrier 18 est susceptible de se déplacer axialement en coulissment sur les colonnettes 14 et 16 afin de solliciter un second élément de friction ou élément extérieur 38 contre l'autre face du disque 12. Comme le montre la figure 1, l'élément de friction intérieur 36 est supporté en coulissement et en ancrage par des bords axiaux circonférentiellement espacés 40 et 42 formés sur les bras 24 et 26 du support fixe 10. L'élément de friction extérieur 38 est reçu en ancrage sur des bords axiaux circonférentiellement espacés 44 et 46 formés sur l'étrier 18. Deux axes 48 et 50 maintiennent les éléments de friction intérieur et extérieur par rapport à l'étrier 18 et au support fixe 10 en passant par des perçages placés en vis-à-vis et formés successiuement dans l'étrier 18 les éléments de friction 38, 36 puis le support fixe 10. Deux épingles 52 placées entre l'étrier 18 et l'élément de friction 38 immobilisent axialement les axes 48 et 50. Conformément à l'invention, et en se reportant a la figure 1, on voit que l'étrier 18 comporte une ouverture centiale 54 permettant l'extraction radiale des éléments de friction 36 et 38, cette ouverture 54 définissant quatre zones de l'étrier, c'est-à-dire les portions 56 et 58 passant par dessus le disque et reliant les portions 60 et 62 placées de part et d'autre du disque. Dans le mode de réalisation représenté, la portion d'étrier 60 comporte le moteur de frein 28. Conformément à l'invention, les colonnettes 14 et 16 traversent l'ouverture centrale 54 et sollicitent en rapprochement les portions d'étrier 60 et 62 au moyen d'un système vis-écrou dans le mode de réalisation représenté, la vis comportant une tête 64 en appui sur la portion 60, l'autre extrémité de la vis comportant des écrous 66 montés serrés sur la portion 62; la partie centrale lisse de la vis formant la colonnette de coulissement 14 ou 16. En se reportant à la figure 2, on voit que la colonnette 14 a une fonction triple. D'abord sa fonction de base, à savoir le coulissement de l'étrier par rapport au support fixe, ensuite le montage pré-contraint des écrous 66 limite les déflections des portions 60 et 62 de l'étrier lorsque le frein est appliqué, enfin la colonnette 14 augmente la rigidité de la portion d'étrier 56, en effet, dans le calcul des contraintes et des déformations de l'étrier, et plus précisément des portions 56 et 58 de celui-ci, si les colonnettes 14 ne sont pas pré-contraintes, seul l'angle a intervient alors que le montage pré-contraint des colonnettes permet de faire intervenir l'angle a + b ce qui correspond en fait à une augmentation des portions d'étrier 56 et 58 sans augmenter le poids du frein d'une part, et d'autre part sans augmenter son encombrement radial, les bras 24 et 26 du support fixe étant logés comme les colonnettes 14 et 16 dans l'ouverture centrale 54 de l'étrier 18.

Dans un mode de réalisation non représenté, le moteur de frein 28 est formé par portion 60 rapportée comportant deux oreilles taraudées dont les axes sont confondus avec les axes des colonnettes 14 et 16. Ces dernières comportent une partie filetée dans la zone localisée entre la tête 64 et la partie lisse utilisée pour le coulissement de l'étrier 18. Au montage, avant la mise en place des écrous 66 le moteur de frein est assemblé sur l'étrier, les oreilles du moteur 28 étant placées entre l'étrier 18 et les bras 56 et 58. · Après serrage des moteurs à l'aide des taraudages et des parties filetées, on procède au montage et au serrage des écrous 66 pour pré-contraindre les colonnettes. Les colonnettes ont alors une quatrième fonction à savoir la tenue du moteur de frein 28 sur l'étrier 18.

Il est bien évident que l'inventien n'est pas limitée au mode de réalisation représenté, par exemple on pourrait avantageusement remplacer les écrous 66 par un taraudage formé dans la portion d'étrier 62, le montage pré-contraint des colonnettes 14 et 16 étant alors effectué directement par vissage des têtes 64 jusqu'à une valeur de couple prédéterminée pour obtenir la pré-contrainte désirée.

## Revendications

1. Frein à disque à étrier (18) monté coulissant par l'intermédiaire de deux colonnettes axiales (14, 16) sur un support fixe (10), des moyens d'actionnement (28) étant associés audit étrier (18) pour solliciter directement un premier élément de friction (36) contre une première face du disque (12) et, par réaction au travers de l'étrier coulissant (18), un second élément de friction (38) contre l'autre face du disque (12), lesdites colonnettes (14, 16) étant solidaires de l'étrier (18) et traversant des alésages de guidage et de coulissement (20, 22) formés dans des bras (24, 26) circonférentiellement espacés du support fixe (10), et ledit étrier (18) présentant la forme générale d'un cadre rectangulaire et comportant deux portions latérales (56, 58) orientées parallèlement à l'axe du disque de manière à chevaucher celui-ci et deux portions longitudinales (60, 62) orientées parallèlement au plan du disque, toutes ces portions délimitant une ouverture centrale rectangulaire (54) au travers de laquelle peuvent être introduits et extraits radialement les éléments de friction (36, 38), caractérisé en ce que l'ouverture centrale (54) de l'étrier se prolonge de part et d'autre des éléments de friction (36, 38) au delà de leurs extrémités latérales de façon à ménager des espaces libres entre celles-ci et les portions latérales (56, 58) de l'étrier, en ce que les bras (24, 26) du support fixe (10) et les colonnettes axiales (14, 16) sont logés dans lesdits espaces libres, et en ce que lesdites colonnettes axiales (14, 16) sont engagées sous précontrainte dans les portions longitudinales (60, 62) de l'étrier de manière à imposer à celles-ci une précontrainte de flexion permanente tendant à les rapprocher l'une de l'autre.

2. Frein à disque selon la Revendication 1, caractérisé en ce que les portions latérales (56, 58) de l'étrier ont une section en forme générale d'arc de cercle concentrique à l'axe du disque en ce que les bras (24, 26) du support fixe (10) ont une forme sensiblement cylindrique avec un diamètre extérieur du même ordre de grandeur que l'épaisseur radiale desdites portions latérales (56, 58), et en ce que lesdits bras (24, 26) et lesdites portions latérales (56, 58) sont alignés circonférentiellement entre eux et concentriquement à l'axe du disque.

3. Frein à disque selon la Revendication 1 ou 2, caractérisé en ce que les colonnettes axiales (14, 16) sont constituées chacune par une vis à corps lisse dont la tête (64) prend appui sur la face extérieure d'une des portions longitudinales (60, 62) de l'étrier et dont l'extrémité filetée coopére avec l'autre portion longitudinale pour créer la précontrainte de flexion désirée.

4. Frein à disque selon la Revendication 3, caractérisé en ce que l'extrémité filetée de la vis s'engage aux fins de serrage dans un alésage taraudé formé dans l'épaisseur de l'autre portion longitudinale de l'étrier.

5. Frein à disque selon la Revendication 3, caractérisé en ce que l'extrémité filetée de la vis dépasse hors de l'autre portion longitudinale de l'étrier, le serrage étant obtenu au moyen d'écrous (66) prenant appui sur la face extérieure de cette autre portion.

6. Frein à disque selon l'une quelconque des revendications précédentes, caractérisé en ce que les moyens d'actionnement (28) sont maintenus sur ledit étrier (18) au moyen desdites colonnettes (14, 16).

**Patentansprüche**

1. Scheibenbremse mit einem Bremssattel (8), der über zwei axiale Bolzen (14, 16) auf einem Bremsträger (10) gleitend gelagert ist, wobei dem Bremssattel (18) Betätigungsmittel (28) zugeordnet sind, um einen ersten Reibbacken (36) unmittelbar gegen eine erste Fläche der Bremsscheibe (12) und einen zweiten Bremsbacken (38) durch Reaktion über den schwimmenden Bremssattel (18) gegen die andere Fläche der Bremsscheibe (12) anzudrücken, wobei die Bolzen (14, 16) am Bremssattel (18) festgelegt sind und sich durch Führungsund Gleitbohrungen (20, 22) in in Umfangsrichtung beabstandeten Armen (24, 26) des Bremsträgers (10) hindurcherstrecken, und der Bremssattel (18) ungefähr die Form eines rechteckigen Rahmens hat und zwei Seitenabschnitte (56, 58) sowie zwei Längsabschnitte (60, 62) aufweist, von denen die Seitenabschnitte parallel zur Bremsscheibenachse so verlaufen, daß sie die Bremsscheibe übergreifen, und die beiden Längsabschnitte parallel zur Bremsscheibenebene verlaufen, wobei diese Abschnitte eine rechteckige zentrale Öffnung (54) begrenzen, durch die die Bremsbacken (36, 38) radial eingeführt und herausgenommen werden können, dadurch gekennzeichnet, daß die zentrale Öffnung (54) des Bremssattels beidseitig zu dem Bremsbacken (36, 38) über deren seitliche Ränder hinaus verlängert ist, derart, daß zwischen diesen und den Seitenabschnitten (56, 58) des Bremssattels Freiräume vorhanden sind, daß die Arme (24, 26) des Bremsträgers (10) und die axialen Bolzen (14, 16) in diesen Freiräumen angeordnet sind, und daß die axialen Bolzen (14, 16) unter Vorspannung in die Längsabschnitte (60, 62) des Bremssattels greifen, derart, daß sie diesen eine Biegespannung verleihen, die sie aufeinander zu zu bewegen sucht.

2. Scheibenbremse nach Anspruch 1, dadurch gekennzeichnet, daß die Seitenabschnitte (56, 58) des Bremssattels einen Querschnitt in Form eines Kreisbogens haben, der konzentrisch zur Bremsscheibenachse ist, daß die Arme (24, 26) des Bremsträgers (10) eine im wesentlichen zylindrische Form mit einem Außendurchmesser in der gleichen Größenördnung wie die radiale Dicke der Seitenabschnitte (56, 58) haben, und daß die Arme (24, 26) und die Seitenabschnitte (56, 58) in Umfangsrichtung zueinander ausgerichtet und konzentrisch zur Bremsscheibenachse sind.

3. Bremsscheibe nach Anspruch 1 oder 2, dadurch gekennzeichnet, daß die axialen Bolzen (14, 16) jeweils von einer Schraube mit einem glatten Körper gebildet sind, deren Kopf (64) an der Außenfläche eines der Längsabschnitte (60, 62) des Bremssattels anliegen und dessen mit Gewinde versehenes Ende mit dem anderen Längsabschnitt zusammenwirkt, um die gewünschte Biegespannung zu erzeugen.

4. Bremsscheibe nach Anspruch 3, dadurch gekennzeichnet, daß das mit Gewinde versehene Ende der Schraube zwecks Verspannung in eine Gewindebohrung eingeschraubt ist, die in der Dicke des anderen Längsabschnittes des Bremssattels gebildet ist.

5. Scheibenbremse nach Anspruch 3, dadurch gekennzeichnet, daß das mit Gewinde versehene Ende der Schraube über den anderen Längsabschnitt des Bremssattels hinausragt, wobei die Verspannung mittels Muttern (66) erfolgt, die an der Außenseite dieses anderen Abschnittes anliegen.

6. Scheibenbremse nach einem der vorhergehenden Ansprüche, dadurch gekennzeichnet, daß die Betätigungsmittels (28) mit Hilfe der Bolzen (14, 16) an dem Bremssattel (18) gehalten werden.

## Claims

1. Disc brake including a caliper (18) slidingly mounted by means of two axial columns (14, 16) on a fixed support (10), actuating means (28) being associated to said caliper (18) in order to urge directly a first friction member (36) against a first face of the disc (12) and by reaction via the floating caliper (18) a second friction member (38) against the other face of the disc (12), said columns (14, 16) being fixed to the caliper (18) and traversing guiding and sliding bores (20, 22) formed in circumferentially spaced arms (24, 26) of the fixed support (10), and said caliper (18) presenting the general form of a rectangular frame and comprising two lateral portions (56, 58) extending parallel to the axis of the disc such as to straddle the latter, and two longitudinal portions (60, 62) extending parallel to the plane of the disc, all these portions delimiting a rectangular central opening (54) through which the friction members (36, 38) may be radially introduced and withdrawn, characterized in that the central opening (54) of the caliper is prolongated on either side of the friction members (36, 38) beyond their lateral ends such as to provide free spaces between the latter and the lateral portions (56, 58) of the caliper, in that the arms (24, 26) of the fixed support (10) and the axial columns (14, 16) are disposed within said free spaces, and in that said axial columns (14, 16) are engaged under bias in the longitudinal portions (60, 62) of the caliper such as to impose to the later a permanent flexing bias tending to move them towards each other.

2. Disc brake according to claim 1, characterized in that the lateral portions (56, 58) of the caliper are of a cross-section in the general form of a circular arc concentric to the axis of the disc, in that the arms (24, 26) of the fixed support (10) are of a substantially cylindrical form with an external diameter in the same dimensional order as the radial thickness of said lateral portions (56, 58), and in that said arms (24, 26) and said lateral portions (56, 58) are aligned circumferentially to each other and concentrically to the axis of the disc.

3. Disc brake according to claim 1 or claim 2, characterized in that the axial columns (14, 16) each are comprised of a bolt having a smooth body, the head (64) of the bolt engaging the external face of one of the longitudinal portions (60, 62) of the caliper and the threaded end of the bolt cooperating with the other longitudinal portion in order to create the desired flexing bias.

4. Disc brake according to claim 3, characterized in that the threaded end of the bolt, for tensioning purposes, engages a threaded bore formed in the wall of the other longitudinal portion of the caliper.

5. Disc brake according to claim 3, characterized in that the threaded end of the bolt extends beyond the other longitudinal portion of the caliper, the tensioning being obtained by means of nuts (66) engaging the external face of said other portion.

Disc brake according to any of the preceding claims, characterized in that the actuating means (28) are maintained on said caliper (18) by means of said bolts (14, 16).

FIG_1

FIG. 2

FIG. 3

0 115 457